# EUROPEAN PATENT SPECIFICATION

(11) **EP 3 815 947 B1**
(45) Date of publication and mention of the grant of the patent: **13.09.2023**
(21) Application number: 20204026.7
(22) Date of filing: 27.10.2020
(51) Int. Cl.: B60K 7/00, F16H 3/00, F16H 3/66

(54) **DRIVE WHEEL WITH EPICYCLIC GEAR**
ANTRIEBSRAD MIT UMLAUFGETRIEBE
ROUE D'ENTRAÎNEMENT À ENGRENAGE ÉPICYCLIQUE

(30) Priority: 31.10.2019 IT 201900020144
(43) Date of publication of application: 05.05.2021
(73) Proprietor: Engines Engineering S.r.l., 40055 Castenaso (Bologna) (IT)
(72) Inventor: TROZZI, Leonardo, 40139 BOLOGNA (IT)
(74) Representative: Puggioli, Tommaso

(56) References cited:
- EP-A1- 2 855 249
- CA-A- 853 439
- GB-A- 1 248 494

## Description

This invention relates to a propulsion apparatus and a vehicle fitted with this propulsion apparatus.

It is extremely important in the transport sector to guarantee the maximum efficiency of the vehicle, and in particular of the propulsion apparatus, in order to reduce consumption and pollution.

Moreover, it is equally important to guarantee constructional simplicity of the apparatuses of which a vehicle is composed in such a way as to minimise construction and maintenance costs.

Over recent years, the environmental impact and the development of technology have pushed the transport sector to more actively look towards alternative solutions to traditional fossil fuel engines.

Amongst the electric vehicles typically used, there is, for example, the use of drive wheels mounted on lightweight vehicles, typically with two wheels, such as mopeds or electric bicycles and pedal assist bikes.

The expression "drive wheel" means, in this description, a propulsion apparatus comprising an electric motor coupled to an epicyclic gear train for reducing or multiplying motor revolutions, housed inside the wheel rim of the vehicle.

This solution has several advantages such as, for example, the simplification of layout, constructional compactness and the performances which significantly reduce the production costs and, consequently, facilitate entry on the market.

However, in order to fully exploit the potential of the electric motors it is necessary to take into account the characteristic operating curve and the context in which they are used.

In fact, the efficiency of an electric motor depends mainly on parameters such as the rotation speed and the delivered torque. In particular, the electric motor operates at low efficiency values for low rotation speeds and for low torque values delivered.

In other words, the electric motor operates at maximum efficiency in a small operating range for optimum values of these parameters.

If we consider, for example, the highway application, it is evident how the electric motor, mounted, for example, on a aerostatic, will work, for most of the time, far from these optimum values.

For this purpose, the introduction of at least a second transmission ratio is known for widening the operating field in which the motor operates at high efficiency.

However, this solution has made the propulsion apparatus, and in particular an epicyclic gear train contained therein, more complex, increasing the number of components and, consequently, the production cost.

Moreover, the transmission ratio, in these solutions, is typically obtained by means of manually operated clutches which make its by the user more complicated and complex.

For example, considering a moped, one of the main advantages is precisely to have a single transmission ratio without the presence of gears. A strongly felt need is therefore to develop propulsion apparatuses, and in particular drive wheel, which are able to operate in a very efficient manner without losing the structural simplicity which limits the construction costs.

Document GB1248494 discloses an electric motor wheel combined with an electrically released disc brake, the wheel being provided with two possible transmission ratios.

All the components of the driving gear are accommodated inside the contours of the corresponding road or ground wheel; a two-pole two-disc electric motor, which is incorporated in the motor wheel, is coupled with a planetary reducing gear, which gear having two high reduction ratios.

The aim of the invention is to satisfy the above-mentioned needs.

In particular, the aim of the invention is to provide a propulsion apparatus and a vehicle fitted with the propulsion apparatus which operate in an efficient manner, in particular operating in a large operating window.

A further aim of the invention is to provide a propulsion apparatus and a vehicle fitted with this propulsion system characterised by a greater constructional simplicity.

A further aim of the invention is to provide a propulsion apparatus and a vehicle fitted with this propulsion system which is able to make the driving simple and not complicated.

The technical purpose indicated and the aims specified are substantially achieved by a propulsion apparatus according to claim 1 and a vehicle according to claim 17 fitted with the propulsion system which is able to operate with at least two possible transmission ratios.

Further features and advantages of the invention are more apparent in the non-limiting description which follows of a preferred embodiment of a propulsion apparatus and a vehicle fitted with the propulsion apparatus. The description is set out below with reference to the accompanying drawings which are provided solely for purposes of illustration without restricting the scope of the invention and in which:
- Figure 1 is a side view cross-section of an embodiment of the propulsion apparatus according to the description;
- Figure 2 is a transversal cross-section of the propulsion apparatus of Figure 1 according to the description;

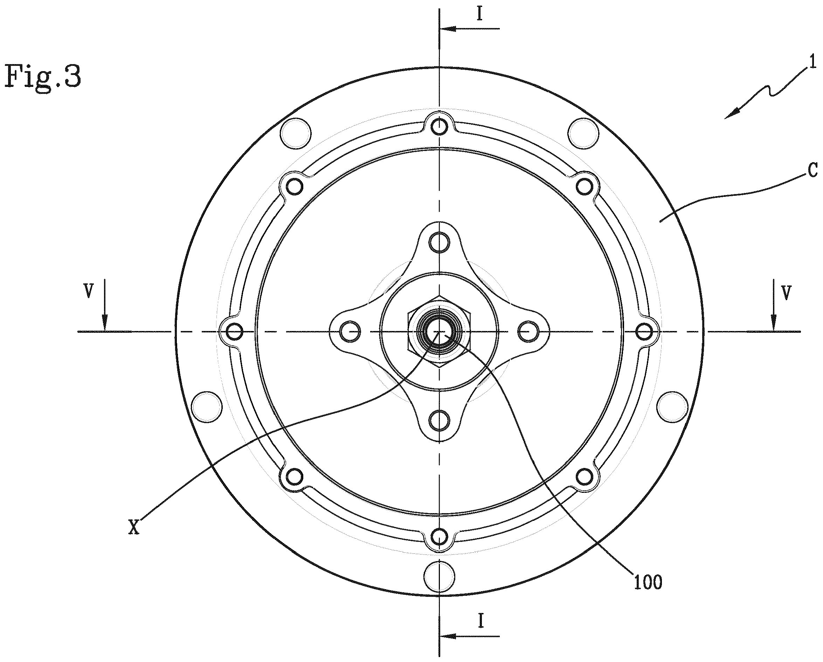

- Figure 3 is a rear view of the propulsion apparatus of Figure 1 according to the description;
- Figure 4 is a detail of the side view cross-section of the embodiment of the propulsion apparatus of Figure 1 according to the description;
- Figure 5 is a top view cross-section of the propulsion apparatus of Figure 1 according to the description;
- Figure 6 is a side view cross-section of a further embodiment of the propulsion apparatus according to the description;
- Figure 7 is a detail of the side view cross-section of the embodiment of the propulsion apparatus of Figure 6 according to the description;
- Figure 8 is a side view of a detail of a vehicle fitted with an embodiment of a propulsion apparatus according to the description;
- Figure 9 is a rear view cross-section of vehicle fitted with an embodiment of a propulsion apparatus according to the description.
- Figure 10 shows a form of realization of a propulsion apparatus in accordance with this description, in a schematic section view;
- Figure 11 shows a detail of a form of realization of a propulsion apparatus in accordance with this description, in a schematic section view.

With reference to the accompanying drawings, the numeral 1 denotes in its entirety a propulsion apparatus according to the invention.

Mainly, the propulsion apparatus 1 comprises an epicyclic gear train 2, an electric motor 3 with respective drive shaft 4, an output shaft 5 and an actuation system 100.

The propulsion apparatus 1 preferably comprises a containment body "C" in which are housed, at least partly, the epicyclic gear train 2, the electric motor 3, the drive shaft 4 and the output shaft 5.

The electric motor 3 transforms the input electrical power, provided preferably by a battery (not illustrated in the drawings), into mechanical power made available to the drive shaft 4 which is rotationally constrained about an axis of rotation "X".

The drive shaft 4 is coupled to the epicyclic gear train 2, which is interposed between the drive shaft 4 and the output shaft 5.

The epicyclic gear train 2 comprises at least one sun gear 6, at least one gear wheel 7 and at least one satellite gear 8, interposed between at least one sun gear 6 and at least one gear wheel 7.

The epicyclic gear train 2 is configured to adopt at least two different configurations corresponding to different transmission ratios between the drive shaft 4 and the output shaft 5.

In other words, the epicyclic gear train 2 makes it possible to obtain at least two different ratios between the speed of rotation of the drive shaft 4 and the speed of rotation of the output shaft 5, substantially transferring the same mechanical power.

The epicyclic gear train 2 can switch between these at least two configurations by the action of the actuation system 100.

In particular, the actuation system 100 comprises a switching unit 101, slidable along the axis of rotation "X" of the drive shaft 4 between a first and at least a second position corresponding, respectively, to the at least a first and a second configuration of the epicyclic gear train 2. Still more specifically, the switching unit 101 comprises an engagement portion 102 configured for engaging respective portions of the epicyclic gear train 2 as a function of the at least a first and a second position in which the switching unit 101 is located.

In other words, depending on the position adopted by the switching unit 101, it can be selectively engaged in a reversible fashion with coaxial rotatable units 9 forming part of the epicyclic gear train 2.

The epicyclic gear train 2 comprises coaxial rotatable units 9 which, selectively engaged by the actuation system 100, allow the epicyclic gear train 2 to vary configuration and corresponding transmission ratio between the drive shaft 4 and the output shaft 5.

The coaxial rotatable units 9 are adjacent to each other and have meshing surfaces 10 having different diameters for making the different transmission ratios.

In other words, at the same angular speed transmitted by the drive shaft 4, the selection of the coaxial rotatable units 9 allows the speed of the output shaft 5 to be varied because the coaxial rotatable units 9 have different tangential speeds due to the fact that they have different diameters.

In this way, the epicyclic gear train 2 modifies the ratio between the rotation revolutions of the drive shaft 4 and the rotation revolutions of the output shaft 5 to which the epicyclic gear train 2 is interposed.

In particular, the switching unit 101 is interposed between the coaxial rotatable units 9 and one between the drive shaft 4 and the output shaft 5, as a function of the embodiment used, as described below.

The coupling between the switching unit 101 and the coaxial rotatable units 9 occurs by means of the engagement portion 102, included in the switching unit 101, and a corresponding receiving outline 11, made on each of the coaxial rotatable units 9 and shaped to match the engagement portion 102.

In particular, the coupling is such as to constrain the rotation of the engagement portion 102 and the coaxial rotatable element 9 selected, making them integral.

The coupling occurs by moving the switching unit 101 along the axis of rotation "X" between the respective positions until engaging the selected coaxial rotatable unit 9.

In fact, the switching unit 101 has a guide portion 103, integral with the engagement portion 102, housed at least partly inside the drive shaft 4 or the output shaft 5.

The coupling between the switching unit 101 and one between the drive shaft 4 and the output shaft 5 is such as to constrain them in rotation allowing the sliding in a longitudinal direction thanks to the presence of grooves (not shown in the drawings).

In other words, once engaged, the switching unit 101 is rotationally constrained both to the selected coaxial rotatable unit 9 and to one between the drive shaft 4 and the output shaft 5, thus establishing mechanical continuity between these elements.

The guide portion 103 and the engagement portion 102 may be made in an integral fashion (as a single body) or the engagement portion 102 may be applied stably to the guide portion 103, and in particular to a relative end coming out from the drive shaft 4 or from the output shaft 5 to which it is coupled, by means of, for example, keying, screwing, fastening with ring nut.

The engagement portion 102 is axially outside the drive shaft 4 or the output shaft 5 to which it is coupled in such a way as to be able to selectively engage the receiving portion of the coaxial rotatable units 9 in which it is, after engaging, at least partly housed.

With regard to the coaxial rotatable units 9, their meshing surfaces 10 are engaged, preferably in a permanent fashion, with respective meshing surfaces 10 of the at least one satellite gear 8.

In effect, the at least one satellite gear 8 has a plurality of meshing surfaces 10 having different diameters. The number of meshing surfaces 10 of the at least one satellite gear 8 corresponds to the number of coaxial rotatable units 9 and, therefore, to the number of transmission ratios provided by the epicyclic gear train 2.

In particular, the meshing surfaces 10 of the satellite gear 8 are rotationally integral with each other and preferably the satellite gear 8 is made of a monolithic body.

In order to improve the stability of the positions adopted by the switching unit 101 relative to the coaxial rotatable units 9, the propulsion apparatus 1 has stabilising means 12 configured to stabilise the axial position of the switching unit 101 at the at least a first and a second position.

Preferably, the stabilising means 12, made in a portion of the containment body "C", comprise one or more stop members 13 kept radially pressed against an outer surface of the switching unit 101 and engageable in respective sockets 104 of the switching unit 101.

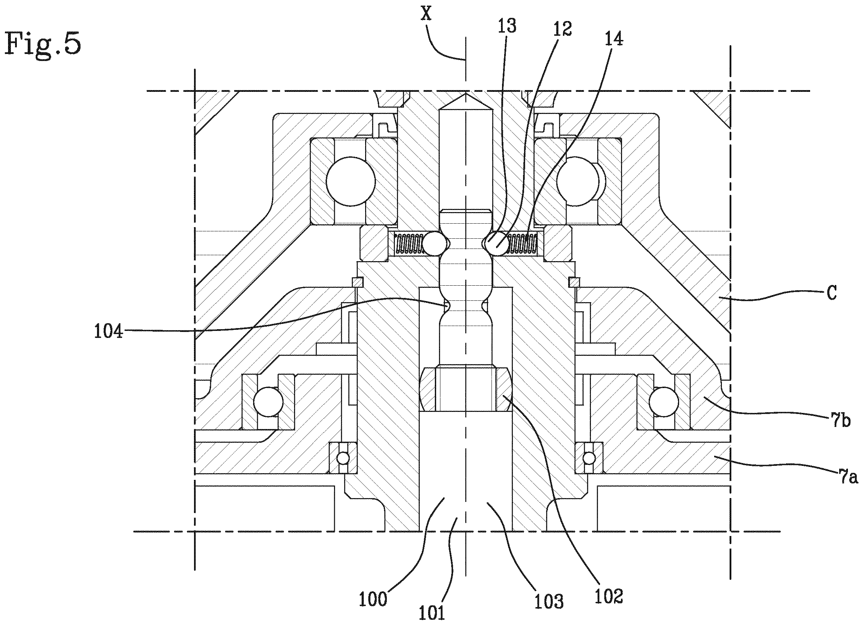

As shown in detail in Figure 5 the stop elements 104 are preferably associated with springs 14, housed in respective seats, which push them preferably in a radial direction towards the axis of rotation "X".

The sockets 104 are positioned in such a way as to engage the stop elements 13 when the switching unit 101 reaches the at least a first and a second position.

Preferably, the sockets 104 have ramps positioned specularly and configured to radially move the stop elements 13, overcoming the elastic force of the springs 14, during the translation of the switching unit 101 between the at least two positions.

Advantageously, thanks to the stabilising means 12, the switching unit 101 adopts a stable axial position, considerably reducing slipping due to the vibrations which occur in the normal operation of the propulsion apparatus 1.

According to an embodiment the switching unit 101, and in general the electro-mechanical actuator, are positioned partly outside the containment body "C" of the propulsion apparatus 1 to allow a switching action activated from the outside of the containment body "C".

The actuation system 100 is, in effect, controlled by a control unit "U", configured to operate automatically as a function of at least one operating parameter of the propulsion apparatus 1 calculated by the control unit "U" starting from measurements carried out by respective sensors, wherein the measurements are continuously recorded by the control unit "U". Based on these data and a mapping which takes into account the characteristics of the engine, the control unit "U" calculates the fundamental parameters and checks whether the conditions correspond to those defined for changing the transmission ratio.

The parameters are selected between: motor revolutions, absorbed current, battery voltage.

In this way, the control unit "U" sends the transmission ratio change signal to the actuation system 100.

According to a preferred embodiment, the actuation system 100 comprises a control actuator 105 by which the switching element 101 moves translationally between the at least two positions, varying in effect the configuration, and therefore the transmission ratio, of the propulsion apparatus 1.

The control actuator 105 may be formed inside or outside the containment body "C" of the propulsion apparatus 1.

The control actuator 105 may be selected, for example, between induction type actuators and pneumatic type actuators.

Different embodiments of the propulsion apparatus 1 are discussed below.

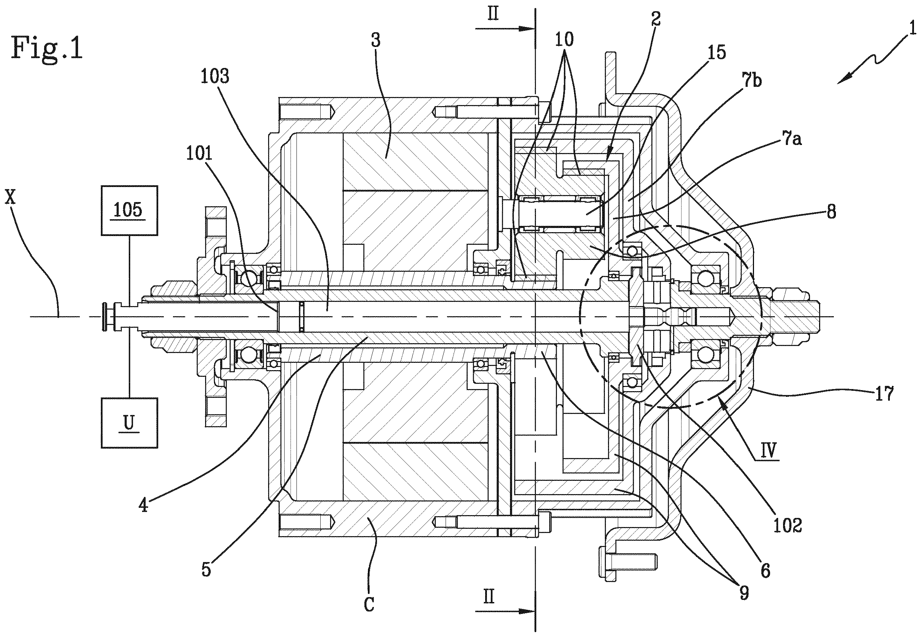

Figure 1 shows a first embodiment of the propulsion apparatus 1.

According to this embodiment, the coaxial rotatable units 9 are defined by at least a first gear wheel 7a and a second gear wheel 7b of the epicyclic gear train 2 and the switching unit 101 comprises an engagement portion 102 rotationally integral in a permanent fashion with the output shaft 5.

In other words, the drive shaft 4 is stably connected or constructed integrally with a pinion corresponding to the sun gear 6 of the epicyclic gear train 2 being rotationally constrained and integral.

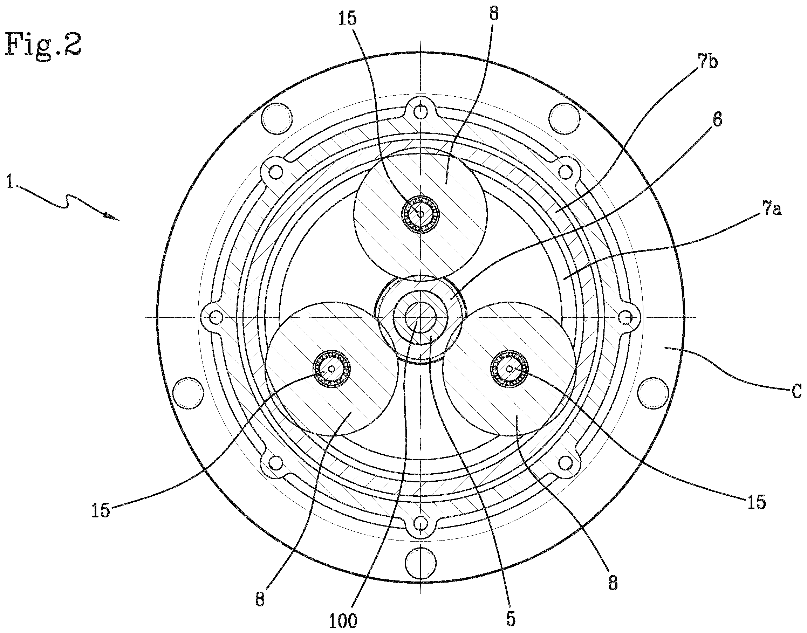

The sun gear 6 is engaged permanently with three satellite gears 8 by meshing surfaces 10 shaped to match made on the respective gears, as shown in Figure 2.

According to other embodiments, the number of satellite gears 8 may be different from three.

The satellite gears 8 are rotationally constrained around respective pins 15 fixed to portions of the containment body "C" of the propulsion apparatus 1 and have two meshing surfaces 10.

The three satellite gears 8, in a position diametrically opposite that used for coupling with the sun gear 6, are permanently coupled to respective two inner meshing surfaces 10 respectively belonging to the first and second gear wheels 7a and 7b, where the gear wheels have different diameters.

The coupling between the first and second gear wheels 7a and 7b and satellite gears 8 is permanent but the transmission of the mechanical power only occurs at the meshing surface 10 belonging to the gear wheel 7a or 7b selected from the position of the switching unit 101.

In fact, in this configuration, the switching unit 101 is interposed between the gear wheels 7a and 7b and the output shaft 5, and is used to establish mechanical continuity between the epicyclic gear train 2 and the output shaft 5.

According to this embodiment, the gear wheels 7a and 7b are therefore keyed freely on the output shaft 5 and rotated about the axis of rotation "X".

The switching of the transmission ratio occurs with the slipping of the switching unit 101 between a first position (shown in Figure 1) corresponding to the first configuration of the propulsion apparatus 1 and a second position (not illustrated in Figure 1) corresponding to the second configuration of the propulsion apparatus 1.

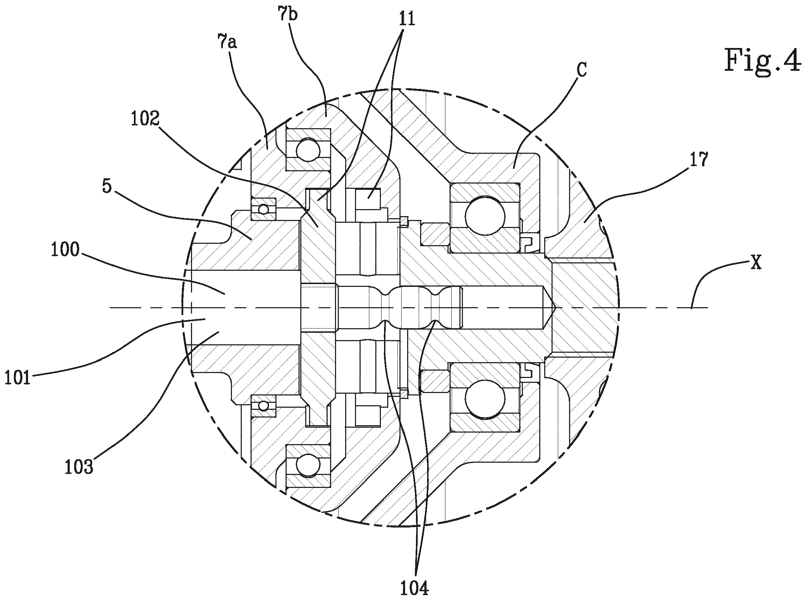

In these two positions, the switching unit 101, and in particular the engagement portion 102, engage selectively the receiving profiles 11 in such a way that in the first position the engagement portion 102 engages the receiving profile 11 of the first gear wheel 7a whilst in the second position of the switching unit 101, the engagement portion 102 engages the receiving profile 11 of the second gear wheel 7b, as shown in detail in Figure 4.

The different diameter of the two gear wheels 7a and 7b, at the same speed of rotation of the satellite gears 8, makes it possible to obtain two different tangential speeds of the respective meshing surfaces 10 and consequently two different speeds of rotation of the output shaft 5 as a function of the gear wheel 7a or 7b selected.

The switching unit 101 is housed at least partly inside the output shaft 5 (in turn housed at least partly inside the drive shaft 4) and has an end protruding from the containment body "C" of the propulsion apparatus 1 on which the control actuator 105 is active (not shown in Figure 1). According to other embodiments not illustrated, the propulsion apparatus 1 may comprise a number of gear wheels 7 greater than two.

This translates into an increase in the transmission ratios of the propulsion apparatus 1.

The number of positions which can be adopted by the switching unit 101 will be naturally proportional to the number of transmission ratios, as will the number of meshing surfaces 10 present on the at least one satellite gear 8, configured to be permanently coupled with the meshing surfaces 10 of the respective gear wheels 7.

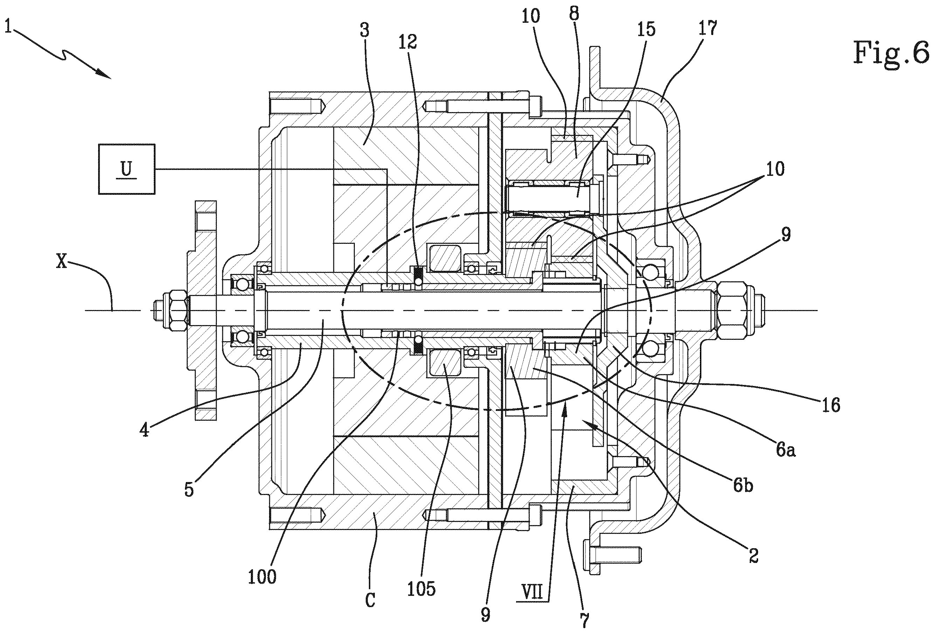

Figure 6 shows a second embodiment of the propulsion apparatus 1.

In this embodiment, the coaxial rotatable units 9 are defined by at least a first pinion and a second pinion forming a first and a second sun gear 6a and 6b of the epicyclic gear train 2 and wherein the switching unit 101 comprises an engagement portion 102 rotationally integral in a permanent fashion with the drive shaft 4.

In other words, the hollow drive shaft 4 houses at least partly the switching unit 101, which is also hollow.

The switching unit 101 is rotationally integral with the drive shaft 4 but has the possibility of translating along the axis of rotation "X" thanks to a coupling by grooves.

In the various positions adopted, the switching unit 101 intercepts and engages selectively and reversibly with one of the two sun gears 6a or 6b. In particular, the switching unit 101 is movable between a first position in which the respective engagement portion 102 engages the receiving outline 11 of the first sun gear 6a and a second position in which the engagement portion 102 engages the receiving outline 11 of the second sun gear 6b.

Since they have different diameters they will have a meshing surface 10 which at the same angular speed will have different tangential speeds. The meshing surfaces 10 of the two sun gears 6a and 6b are permanently coupled to the meshing surfaces 10 of three satellite gears 8.

Depending on the sun gear 6a or 6b selected, a respective tangential speed corresponding to a specific speed of rotation will be transmitted to the three satellite gears 8.

The three satellite gears 8 are in effect constrained in rotation to respective pins 15 fixed to a crown wheel 16 free to rotate about the axis of rotation "X" and permanently keyed to the output shaft 5, to which it is rotationally constrained and integral.

The gear wheel 7, on the other hand, is single and connected to a fixed portion of the containment body "C" of the propulsion apparatus 1.

In this way, as a function of the selected sun gear 6a or 6b, the satellite gears 8 rotate about the respective pins 15 at a specific speed. The rotation of the satellite gears 8 is such as to move in rotation the crown wheel 16 and consequently the output shaft 5 to which the crown wheel 16 is constrained.

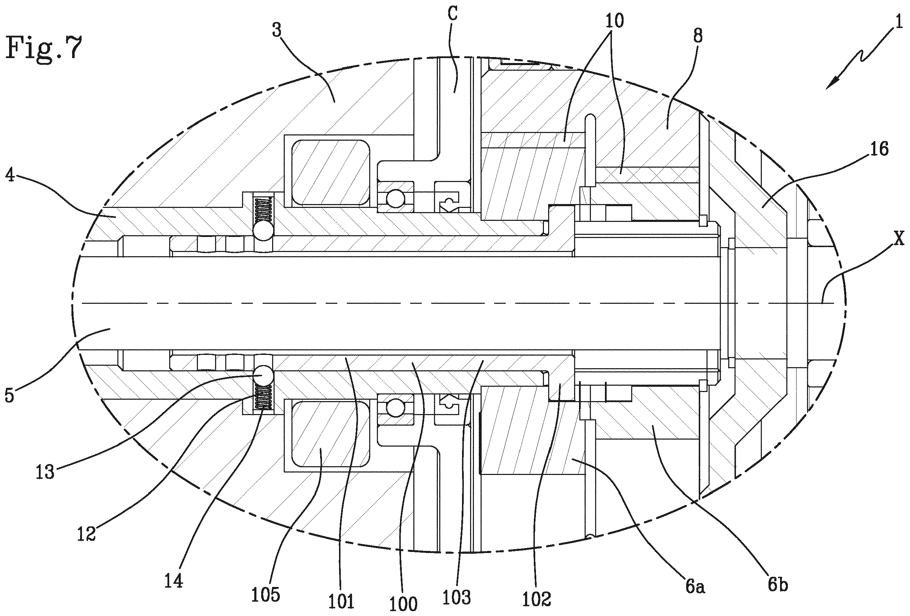

According to this embodiment, as already mentioned, the switching unit 101 is at least partly housed in the drive shaft 4, as shown in detail in Figure 7.

The control actuator 105 which moves the switching unit 101 is preferably of the induction type, as shown in Figure 6.

The 105 induction control actuator includes, for example, a solenoid to which explicit reference is made without loss of generality.

The switching unit 101 is made of ferromagnetic material.

In use, the solenoid is powered to move the switching unit.

Depending on the direction of the current, the switching unit is moved in one direction or in the opposite direction to the first.

When the control actuator 105 is powered, the power supply to the electric motor 3 is suspended.

Preferably, the power supply to the electric motor 3, e.g. the stator of the motor 3, is suspended until the movement of the switching unit 101 is completed.

Preferably, the power supply to electric motor 3, e.g. the stator of the motor, is suspended until the power supply to actuator 105 is ended.

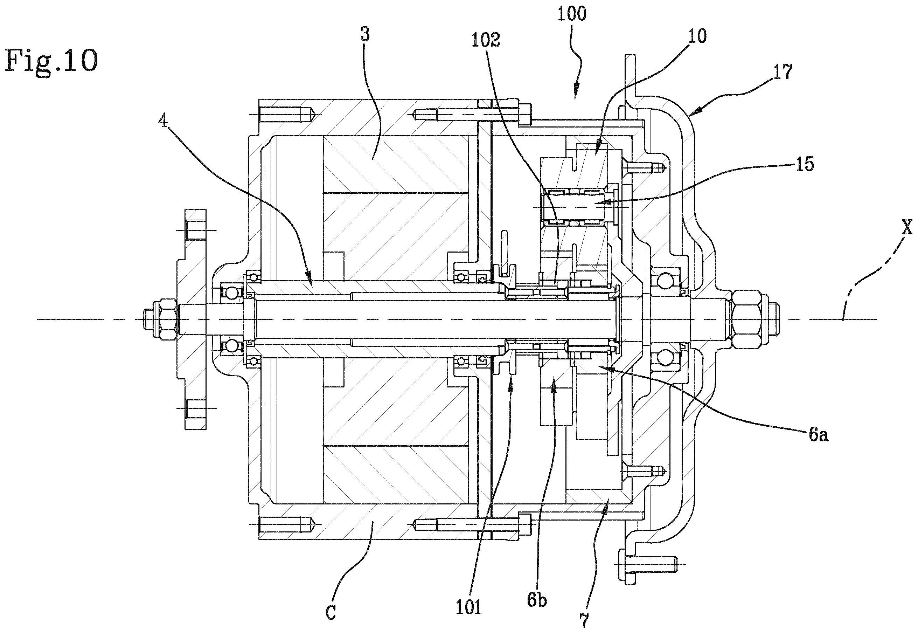

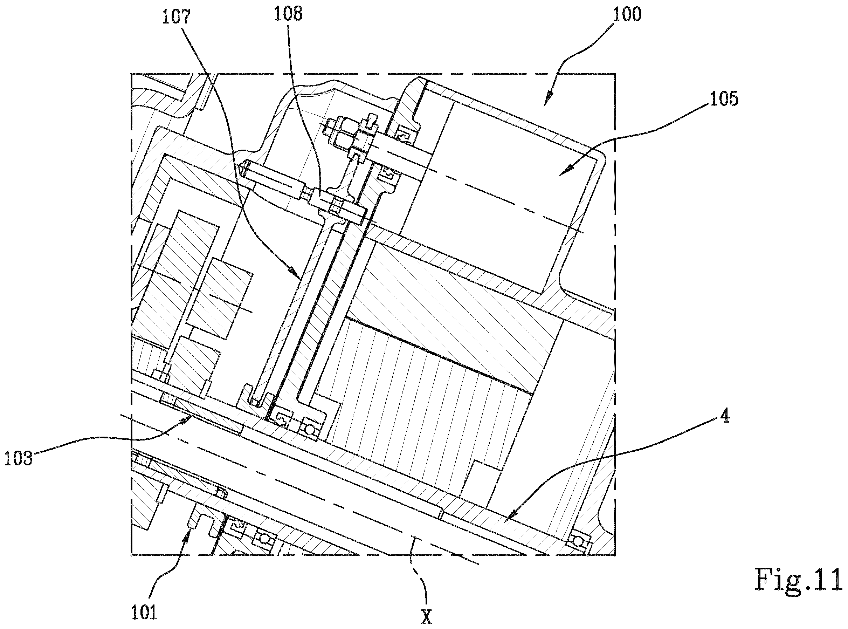

In one embodiment, illustrated for example in Figures 10 and 11, the drive shaft 4 is hollow and has grooves, not illustrated, on its outer surface.

The switching unit 101 is placed inside motor shaft 4 and engaged with splines so that it is integral to motor shaft 4 in rotation but free to slide axially along it.

The switching unit 101 comprises the engagement portion 102 configured to be integral, in rotation, with the solar 6a or solar 6b to the motor shaft 4. The switching element 101 is axially mobile according to the X axis of rotation.

In the example illustrated, control actuator 105 comprises a command fork 107 moved by a 105 solenoid.

The fork 107 is fixed to a mobile unit 105a made of ferromagnetic material moved by solenoid 105.

The command fork 107 is constrained to a pin 108.

The pin 108 is parallel to the X axis and fork 107 slides along it.

The fork 107, on the opposite side of the solenoid, is engaged with control 101 and moves it in the X direction.

In an embodiment, pin 108 is twisted with respect to the X axis of rotation and fork 107 is rotatable around pin 108.

In an embodiment, not illustrated the satellite gears 8 are rotationally constrained to respective pins 15 fixed to fixed portions of the containment body "C" of the propulsion apparatus 1, whilst the gear wheel 7 is keyed to the output shaft 5 being rotationally constrained about the axis of rotation "X".

According to this embodiment it is the gear wheel 7 which move the output shaft 5, transmitting to it mechanical torque and speed of rotation. According to other embodiments not illustrated, the propulsion apparatus 1 may comprise a number of sun gears 6 greater than two.

This translates into an increase in the transmission ratios of the propulsion apparatus 1.

The number of positions which can be adopted by the switching unit 101 will be naturally proportional to the number of transmission ratios, as will the number of meshing surfaces 10 present on the at least one satellite gear 8, configured to be permanently coupled with the meshing surfaces 10 of the respective sun gears 8.

The invention achieves the preset aims by overcoming the drawbacks of the prior art and providing a propulsion apparatus which is able to operate with a high efficiency in a large operating window whilst maintaining a very low constructional complexity.

In fact, the propulsion apparatus provides various transmission ratios simply by multiplying a single type of coaxial rotatable unit for the number of ratios to be obtained (for example, the gear wheels in the embodiment of Figure 1 and the sun gears in the embodiment of Figure 6).

Another aim achieved is to provide a propulsion apparatus which is able to automate the process for changing the transmission ratio without the need for action by the user.

The user will not therefore be involved in the action for changing the transmission ratio, thus simplifying the use of the apparatus.

The invention also relates to a vehicle fitted with the propulsion apparatus described above, wherein the propulsion apparatus 1 is mounted at the hub of a wheel of the vehicle.

The vehicle may be a motorcycle with two or three wheels, a tricycle with a motor, an electric bicycle or a pedal assist bike or lightweight four-wheeled vehicles, such as, for example, quadricycles.

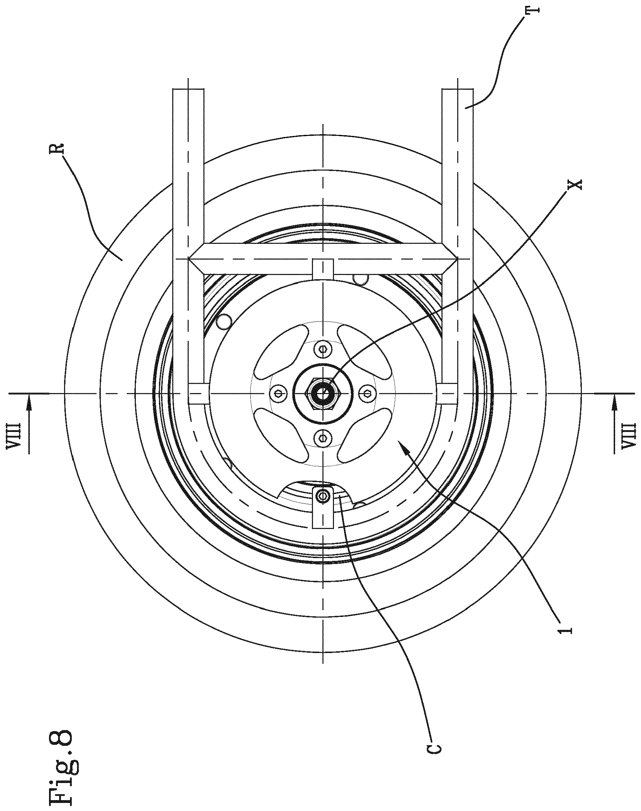

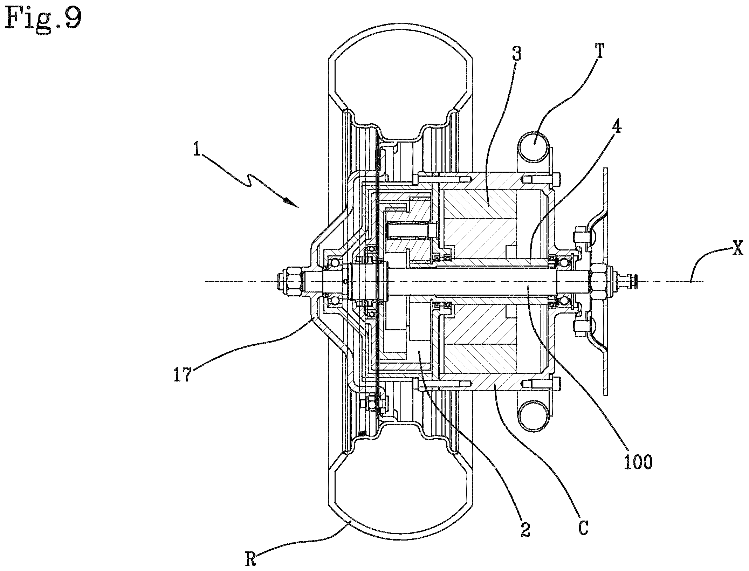

The propulsion apparatus 1, and in particular an end of the output shaft 5, are connected to the wheel "R" by an interface to the wheel hub 17 as shown in Figures 8 and 9.

The containment body "C" is anchored to the chassis "T" of the vehicle, preferably by bolting.

Advantageously, the invention achieves the preset aims by providing an vehicle fitted with a propulsion apparatus 1 which is able to operate close to the maximum efficiency in a large operating field without adversely affecting the simplicity of use of the vehicle.

In effect, there is a plurality of sensors on the vehicle designed to measure a respective plurality of signals representing the operation of the vehicle.

In particular, part of these signals represents the inputs of the user and the driving mode of the user. Signals are sent to the control unit coming, for example, from a sensor for measuring the opening of the accelerator, a sensor for measuring the position of the brake lever, a sensor for measuring the vehicle set-up (inertial platform).

These sensors are able to send signals representing the driving mode of the user, such as, for example, the duration and extent of the accelerations, the duration and extent of the braking, the average and instantaneous speed of the vehicle.

Preferably, there are sensors for measuring the operation of the electric motor 3, which send to the control unit signals representing parameters such as motor revolutions, absorbed current and voltage of the battery.

Based on this data, which is continuously recorded, and a mapping which takes into account the intrinsic characteristics of the engine, the control unit calculates the basic vehicle operating parameters such as the traction torque and the speed of forward movement and checks whether the driving conditions correspond to those defined for changing the transmission ratio.

If the driving conditions correspond to those defined for changing the transmission ratio, the control unit removes the power supply to the electric motor 3, zeroing the torque, activates the control actuator switching the position and, after engaging the drive, re-starts the electric motor 3 adjusting its operation to the new transmission ratio. Advantageously, this management criterion avoids the use of clutches, whilst maintaining a driving of the vehicle as smooth as possible and without complexities.

The control unit is configured in such a way as to guarantee a correct and optimised control of the vehicle, and in particular of the change of the transmission ratio.

## Claims

1. A propulsion apparatus (1) comprising:
- an epicyclic gear train (2) comprising at least one sun gear (6), at least one gear wheel (7) and at least one satellite gear (8), interposed between said at least one sun gear (6) and said at least one gear wheel (7);
- an electric motor (3) comprising a drive shaft (4) connected to said at least one sun gear (6) for providing power to said epicyclic gear train (2);
- an output shaft (5), coupled to said epicyclic gear train (2) for actuating a mechanical load, an end of the output shaft (5) being connectable, by an interface, to a wheel hub (17);
wherein said epicyclic gear train (2) is configured to adopt at least two different configurations corresponding to different transmission ratios between the drive shaft (4) and the output shaft (5), and
wherein said apparatus (1) comprises an actuation system (100), acting on said epicyclic gear train (2) and configured in such a way as to switch said epicyclic gear train (2) between said at least two configurations.

2. The apparatus (1) according to claim 1, wherein the actuation system (100) comprises a switching unit (101) slidable along the axis of rotation (X) of said drive shaft (4) between at least a first and a second position corresponding, respectively, to said at least a first and second configuration of the epicyclic gear train (2).

3. The apparatus according to claim 2, wherein said actuation system (100) comprises a control actuator (105) associated with said switching unit (101) for moving it between said first and said second position corresponding, respectively, to said at least one first and second configuration of the epicyclic gear train (2).

4. The apparatus according to any one of the preceding claims, wherein the actuation system (100) comprises a switching unit (101) movable between at least a first and a second position corresponding, respectively, to said at least a first and second configuration of the epicyclic gear train (2), said switching unit (101) comprising an engagement portion (102) configured to engage respective portions of said epicyclic gear train (2) as a function of said at least a first and second position.

5. The apparatus (1) according to claim 3, comprising a control unit (U) configured for controlling said control actuator (105), as a function of at least one operating parameter of the propulsion apparatus (1) measured by a respective sensor, preferably said at least one operating parameter being selected from: motor revolutions, absorbed current, battery voltage.

6. The apparatus (1) according to any one of claims 2 to 5, wherein said switching unit (101) is selectively engageable with coaxial rotatable elements (9), adjacent to each other, of said epicyclic gear train (2), said coaxial rotatable members (9) having meshing surfaces (10) having different diameters for making said different transmission ratios.

7. The apparatus (1) according to claims 4 and 6, wherein said engagement portion (102) is rotationally integral in a permanent fashion with one or other of said drive shaft (4) and output shaft (5) and can be engaged, selectively and reversibly, with one of said coaxial rotatable elements (9), in particular by means of a shape and/or toothed coupling with a corresponding receiving shape (11) made on each of said coaxial rotatable elements (9).

8. The apparatus (1) according to claims 4 and 6, wherein said engagement portion (102) is coupled in an axially slidable manner with said drive shaft (4) or output shaft (5), in particular by grooved coupling, preferably said drive shaft (4) or output shaft (5) being hollow and said switching unit (101) comprising a guide portion (103), integral with the engagement portion (102) and housed inside said drive shaft (4) or output shaft (5), said engagement portion (102) being axially outside said drive shaft (4) or output shaft (5) and configured for the direct engagement with the coaxial rotatable elements (9).

9. The apparatus (1) according to any one of claims 6 to 8, wherein said at least one satellite gear (8) has a plurality of meshing surfaces (10) having different diameters and engaged, preferably permanently, with said meshing surfaces (10) of the coaxial rotatable elements (9), said meshing surfaces (10) of the satellite gear (8) being rotationally integral with each other and preferably said at least one satellite gear (8) being made in a monolithic body.

10. The apparatus (1) according to any one of claims 6 to 9, wherein said coaxial rotatable elements (9) are defined by at least a first crown (7a) and a second crown (7b) of said epicyclic gear train (2) and wherein said switching unit (101) comprises an engagement portion (102) rotationally integral in a permanent fashion with said output shaft (5), preferably said epicyclic gear train (2) comprising a single sun gear (6) integral with said drive shaft (4), in particular engaged permanently with one of the engagement surfaces (10) of said at least one satellite gear (8).

11. The apparatus (1) according to any one of claims 6 to 9, wherein said coaxial rotatable elements (9) are defined by at least a first pinion and a second pinion forming solar gears (6a and 6b) of said epicyclic gear train (2) and wherein said switching unit (101) comprises an engagement portion (102) rotationally integral in a permanent fashion with said drive shaft (4), preferably said epicyclic gear train (2) comprising a single gear wheel (7), in particular said gear wheel (7) being engaged permanently with one of the engagement surfaces (10) of said at least one satellite gear (8).

12. The apparatus (1) according to claim 11, wherein the output shaft (5) is integral with a planet element (16) rotatable about the axis of rotation (X) of the drive shaft (4) and carrying said at least one satellite gear (8), and wherein said gear wheel (7) is fixed.

13. The apparatus (1) according to claim 11, wherein said output shaft (5) is integral said the gear wheel (7) and wherein said epicyclic gear train (2) comprises a fixed plant element (16), positioned about the axis of rotation (X) of the drive shaft (4) and carrying said at least one satellite gear (8).

14. The apparatus (1) according to any one of claims 2 to 13, wherein said switching unit (101) has stabilising means (12) configured to stabilise the axial position of the switching unit (101) at said at least a first and a second position, preferably said stabilising means (12) comprising one or more stop members (13) kept in radial thrust against an outer surface of the switching unit (101) and engageable in respective sockets (104) of the switching unit (101), located in a position such as to house said stop members (13) when the switching unit (101) reaches said least a first and a second position.

15. The apparatus (1) according to any one of the preceding claims, comprising a containment body (C) in which are housed said electric motor (3), said epicyclic gear train (2) and, at least partly, said actuation system (100).

16. The apparatus according to any one of claims 2 to 14 and claim 15, wherein said switching unit (101) is partly protruding from said containment body (C) to allow a switching action activated from the outside of said containment body (C).

17. A vehicle fitted with a propulsion apparatus (1) according to any one of the preceding claims, wherein the propulsion apparatus (1) is mounted at the hub of a wheel (R) of said vehicle.

## Patentansprüche

1. Antriebsvorrichtung (1), umfassend:
- einen Umlaufgetriebezug (2), der mindestens ein Sonnenrad (6), mindestens ein Zahnrad (7) und mindestens ein Satellitenrad (8) umfasst, das zwischen dem mindestens einen Sonnenrad (6) und dem mindestens einen Zahnrad (7) angeordnet ist;
- einen Elektromotor (3), der eine Antriebswelle (4) umfasst, die mit dem mindestens einen Sonnenrad (6) verbunden ist, um dem Umlaufgetriebezug (2) Leistung bereitzustellen;
- eine Abtriebswelle (5), die mit dem Umlaufgetriebezug (2) zum Betätigen einer mechanischen Last gekoppelt ist, wobei ein Ende der Abtriebswelle (5) durch eine Schnittstelle mit einer Radnabe (17) verbindbar ist;
wobei der Umlaufgetriebezug (2) so ausgelegt ist, dass er mindestens zwei verschiedene Auslegungen einnimmt, die unterschiedlichen Übersetzungsverhältnissen zwischen der Antriebswelle (4) und der Abtriebswelle (5) entsprechen, und
wobei die Vorrichtung (1) ein Betätigungssystem (100) umfasst, das auf den Umlaufgetriebezug (2) wirkt und so ausgelegt ist, dass es den Umlaufgetriebezug (2) zwischen den mindestens zwei Auslegungen umschaltet.

2. Vorrichtung (1) nach Anspruch 1, wobei das Betätigungssystem (100) eine Schalteinheit (101) umfasst, die entlang der Drehachse (X) der Antriebswelle (4) zwischen mindestens einer ersten und einer zweiten Position verschiebbar ist, die jeweils der mindestens einen ersten und zweiten Auslegung des Umlaufgetriebezugs (2) entsprechen.

3. Vorrichtung nach Anspruch 2, wobei das Betätigungssystem (100) einen Steueraktor (105) umfasst, der mit der Schalteinheit (101) assoziiert ist, um sie zwischen der ersten und der zweiten Position zu bewegen, die jeweils der mindestens einen ersten und zweiten Auslegung des Umlaufgetriebezugs (2) entsprechen.

4. Vorrichtung nach einem der vorhergehenden Ansprüche, wobei das Betätigungssystem (100) eine Schalteinheit (101) umfasst, die zwischen mindestens einer ersten und einer zweiten Position bewegbar ist, die jeweils der mindestens einen ersten und zweiten Auslegung des Umlaufgetriebezugs (2) entsprechen, wobei die Schalteinheit (101) einen Eingriffsabschnitt (102) umfasst, der ausgelegt ist, um jeweilige Abschnitte des Umlaufgetriebezugs (2) als Funktion von der mindestens einen ersten und zweiten Position einzugreifen.

5. Vorrichtung (1) nach Anspruch 3, umfassend eine Steuereinheit (U), die dazu ausgelegt ist, den Steueraktor (105) als Funktion von mindestens einem von einem jeweiligen Sensor gemessenen Betriebsparameter der Antriebsvorrichtung (1) zu steuern, wobei vorzugsweise der mindestens eine Betriebsparameter ausgewählt ist aus: Motorumdrehungen, aufgenommem Strom, Batteriespannung.

6. Vorrichtung (1) nach einem der Ansprüche 2 bis 5, wobei die Schalteinheit (101) wahlweise mit koaxialen drehbaren Elementen (9), die einander benachbart sind, des Umlaufgetriebezugs (2) in Eingriff bringbar ist, wobei die koaxialen drehbaren Elemente (9) ineinandergreifende Flächen (10) mit unterschiedlichen Durchmessern aufweisen, um die unterschiedlichen Übersetzungsverhältnisse herzustellen.

7. Vorrichtung (1) nach den Ansprüchen 4 und 6, wobei der Eingriffsabschnitt (102) mit der Antriebswelle (4) und/oder der Abtriebswelle (5) drehfest auf permanenter Weise angeordnet ist und wahlweise und reversibel mit einem der koaxialen drehbaren Elemente (9) in Eingriff gebracht werden kann, insbesondere mittels einer Form- und/oder Zahnkupplung mit einer entsprechenden Aufnahmeform (11), die an jedem der koaxialen drehbaren Elemente (9) ausgebildet ist.

8. Vorrichtung (1) nach den Ansprüchen 4 und 6, wobei der Eingriffsabschnitt (102) axial verschiebbar mit der Antriebswelle (4) oder Abtriebswelle (5) gekoppelt ist, insbesondere durch Rillenkupplung, wobei vorzugsweise die Antriebswelle (4) oder Abtriebswelle (5) hohl ist und die Schalteinheit (101) einen Führungsabschnitt (103) umfasst, der einstückig mit dem Eingriffsabschnitt (102) angeordnet ist und innerhalb der Antriebswelle (4) oder Abtriebswelle (5) untergebracht liegt, wobei der Eingriffsabschnitt (102) axial außerhalb der Antriebswelle (4) oder Abtriebswelle (5) liegt und für den direkten Eingriff mit den koaxialen drehbaren Elementen (9) ausgelegt ist.

9. Vorrichtung (1) nach einem der Ansprüche 6 bis 8, wobei das mindestens eine Satellitengetriebe (8) eine Vielzahl von ineinandergreifenden Flächen (10) mit unterschiedlichen Durchmessern aufweist, die vorzugsweise permanent mit den ineinandergreifenden Flächen (10) der koaxialen drehbaren Elemente (9) in Eingriff stehen, wobei die ineinandergreifenden Flächen (10) des Satellitengetriebes (8) drehfest miteinander verbunden sind und vorzugsweise das mindestens eine Satellitengetriebe (8) in einem monolithischen Körper hergestellt ist.

10. Vorrichtung (1) nach einem der Ansprüche 6 bis 9, wobei die koaxialen drehbaren Elemente (9) durch mindestens eine erste Krone (7a) und eine zweite Krone (7b) des Umlaufgetriebezugs (2) definiert sind und wobei die Schalteinheit (101) einen Eingriffsabschnitt (102) umfasst, der mit der Abtriebswelle (5) drehfest auf permanenter Weise angeordnet ist, wobei vorzugsweise der Umlaufgetriebezug (2) ein einzelnes Sonnenrad (6) umfasst, das mit der Antriebswelle (4) einstückig angeordnet ist, insbesondere permanent mit einer der Eingriffsflächen (10) des mindestens einen Satellitengetriebes (8) in Eingriff steht.

11. Vorrichtung (1) nach einem der Ansprüche 6 bis 9, wobei die koaxialen drehbaren Elemente (9) durch mindestens ein erstes Ritzel und ein zweites Ritzel definiert sind, die Sonnenräder (6a und 6b) des Umlaufgetriebezugs (2) bilden, und wobei die Schalteinheit (101) einen Eingriffsabschnitt (102) umfasst, der mit der Antriebswelle (4) drehfest auf permanenter Weise angeordnet ist, wobei vorzugsweise der Umlaufgetriebezug (2) ein einzelnes Zahnrad (7) umfasst, wobei insbesondere das Zahnrad (7) permanent mit einer der Eingriffsflächen (10) des mindestens einen Satellitengetriebes (8) in Eingriff steht.

12. Vorrichtung (1) nach Anspruch 11, wobei die Abtriebswelle (5) einstückig mit einem Umlaufelement (16) angeordnet ist, das um die Drehachse (X) der Antriebswelle (4) drehbar ist und das mindestens eine Satellitengetriebe (8) trägt, und wobei das Zahnrad (7) feststehend ist.

13. Vorrichtung (1) nach Anspruch 11, wobei die Abtriebswelle (5) einstückig mit dem Zahnrad (7) angeordnet ist und wobei der Umlaufgetriebezug (2) ein feststehendes Umlaufelement (16) umfasst, das um die Drehachse (X) der Antriebswelle (4) positioniert ist und das mindestens eine Satellitengetriebe (8) trägt.

14. Vorrichtung (1) nach einem der Ansprüche 2 bis 13, wobei die Schalteinheit (101) Stabilisierungsmittel (12) aufweist, die dazu ausgelegt sind, die axiale Position der Schalteinheit (101) in der mindestens einen ersten und einer zweiten Position zu stabilisieren, wobei die Stabilisierungsmittel (12) vorzugsweise ein oder mehrere Anschlagelemente (13) umfassen, die in radialem Druck gegen eine Außenfläche der Schalteinheit (101) gehalten werden und in entsprechende Buchsen (104) der Schalteinheit (101) eingreifen können, die sich in einer Position befinden, um die Anschlagelemente (13) aufzunehmen, wenn die Schalteinheit (101) die mindestens eine erste und eine zweite Position erreicht.

15. Vorrichtung (1) nach einem der vorhergehenden Ansprüche, umfassend einen Enthaltekörper (C), in dem der Elektromotor (3), der Umlaufgetriebezug (2) und zumindest teilweise das Betätigungssystem (100) untergebracht sind.

16. Vorrichtung nach einem der Ansprüche 2 bis 14 und Anspruch 15, wobei die Schalteinheit (101) teilweise aus dem Enthaltekörper (C) herausragt, um einen von der Außenseite des Enthaltekörpers (C) aktivierten Schaltvorgang zu ermöglichen.

17. Fahrzeug, das mit einer Antriebsvorrichtung (1) nach einem der vorhergehenden Ansprüche ausgestattet ist, wobei die Antriebsvorrichtung (1) an der Nabe eines Rads (R) des Fahrzeugs montiert ist.

## Revendications

1. Appareil de propulsion (1) comprenant:
- un train d'engrenages épicycloïdal (2) comprenant au moins un pignon solaire (6), au moins une roue dentée (7) et au moins un engrenage satellite (8), interposé entre ledit au moins un pignon solaire (6) et ladite au moins une roue dentée (7);
- un moteur électrique (3) comprenant un arbre d'entraînement (4) relié audit au moins un pignon solaire (6) pour alimenter ledit train d'engrenages épicycloïdal (2);
- un arbre de sortie (5), couplé audit train d'engrenages épicycloïdal (2) pour actionner une charge mécanique, une extrémité de l'arbre de sortie (5) pouvant être reliée, par une interface, à un moyeu de roue (17);
dans lequel ledit train d'engrenages épicycloïdal (2) est configuré pour adopter au moins deux configurations différentes correspondant à des rapports de transmission différents entre l'arbre d'entraînement (4) et l'arbre de sortie (5), et
dans lequel ledit appareil (1) comprend un système d'actionnement (100), agissant sur ledit train d'engrenages épicycloïdal (2) et configuré de manière à faire passer ledit train d'engrenages épicycloïdal (2) entre lesdites au moins deux configurations.

2. Appareil (1) selon la revendication 1, dans lequel le système d'actionnement (100) comprend une unité de commutation (101) pouvant coulisser le long de l'axe de rotation (X) dudit arbre d'entraînement (4) entre au moins une première et une deuxième position correspondant, respectivement, à ladite au moins une première et une deuxième configuration du train d'engrenages épicycloïdal (2).

3. Appareil selon la revendication 2, dans lequel ledit système d'actionnement (100) comprend un actionneur de commande (105) associé à ladite unité de commutation (101) pour la déplacer entre ladite première et ladite deuxième position correspondant, respectivement, à ladite au moins une première et deuxième configuration du train d'engrenages épicycloïdal (2).

4. Appareil selon l'une quelconque des revendications précédentes, dans lequel le système d'actionnement (100) comprend une unité de commutation (101) mobile entre au moins une première et une deuxième position correspondant, respectivement, à ladite au moins une première et une deuxième configuration du train d'engrenages épicycloïdal (2), ladite unité de commutation (101) comprenant une partie d'engagement (102) configurée pour se mettre en prise avec des parties respectives dudit train d'engrenages épicycloïdal (2) en fonction desdites au moins une première et deuxième positions.

5. Appareil (1) selon la revendication 3, comprenant une unité de contrôle (U) configurée pour commander ledit actionneur de commande (105), en fonction d'au moins un paramètre de fonctionnement de l'appareil de propulsion (1) mesuré par un capteur respectif, de préférence ledit au moins un paramètre de fonctionnement étant choisi parmi : les révolutions du moteur, le courant absorbé, la tension de la batterie.

6. Appareil (1) selon l'une quelconque des revendications 2 à 5, dans lequel ladite unité de commutation (101) peut être sélectivement mise en prise avec des éléments rotatifs coaxiaux (9), adjacents les uns aux autres, dudit train d'engrenages épicycloïdal (2), lesdits éléments rotatifs coaxiaux (9) comportant des surfaces d'engrènement (10) de diamètres différents pour réaliser lesdits différents rapports de transmission.

7. Appareil (1) selon les revendications 4 et 6, dans lequel ladite partie d'engagement (102) est solidaire en rotation de façon permanente avec l'un ou l'autre desdits arbre d'entraînement (4) et arbre de sortie (5) et peut être mise en prise, de façon sélective et réversible, avec l'un desdits éléments rotatifs coaxiaux (9), en particulier au moyen d'un accouplement de forme et/ou denté avec une forme réceptrice (11) correspondante réalisée sur chacun desdits éléments rotatifs coaxiaux (9).

8. Appareil (1) selon les revendications 4 et 6, dans lequel ladite partie d'engagement (102) est couplée de manière axialement coulissante avec ledit arbre d'entraînement (4) ou arbre de sortie (5), en particulier par couplage rainuré, de préférence ledit arbre d'entraînement (4) ou arbre de sortie (5) étant creux et ladite unité de commutation (101) comprenant une partie de guidage (103), solidaire de la partie d'engagement (102) et logée à l'intérieur dudit arbre d'entraînement (4) ou arbre de sortie (5), ladite partie d'engagement (102) étant axialement à l'extérieur dudit arbre d'entraînement (4) ou arbre de sortie (5) et configurée pour l'engagement direct avec les éléments rotatifs coaxiaux (9).

9. Appareil (1) selon l'une quelconque des revendications 6 à 8, dans lequel ledit au moins un engrenage satellite (8) comporte une pluralité de surfaces d'engrènement (10) ayant des diamètres différents et mises en prise, de préférence de manière permanente, avec lesdites surfaces d'engrènement (10) des éléments rotatifs coaxiaux (9), lesdites surfaces d'engrènement (10) de l'engrenage satellite (8) étant solidaires en rotation les unes des autres et, de préférence, ledit au moins un engrenage satellite (8) étant réalisé dans un corps monolithique.

10. Appareil (1) selon l'une quelconque des revendications 6 à 9, dans lequel lesdits éléments rotatifs coaxiaux (9) sont définis par au moins une première couronne (7a) et une deuxième couronne (7b) dudit train d'engrenages épicycloïdal (2) et dans lequel ladite unité de commutation (101) comprend une partie d'engagement (102) solidaire en rotation de manière permanente avec ledit arbre de sortie (5), de préférence, ledit train d'engrenages épicycloïdal (2) comprend un seul pignon solaire (6) solidaire de l'arbre d'entraînement (4), en particulier mis en prise de façon permanente avec l'une des surfaces d'engagement (10) dudit au moins un engrenage satellite (8).

11. Appareil (1) selon l'une quelconque des revendications 6 à 9, dans lequel lesdits éléments rotatifs coaxiaux (9) sont définis par au moins un premier pignon et un deuxième pignon formant des pignons solaires (6a et 6b) dudit train d'engrenages épicycloïdal (2) et dans lequel ladite unité de commutation (101) comprend une partie d'engagement (102) solidaire en rotation de façon permanente avec ledit arbre d'entraînement (4), de préférence, ledit train d'engrenages épicycloïdal (2) comprend une seule roue dentée (7), en particulier ladite roue dentée (7) se mettant en prise de façon permanente avec l'une des surfaces d'engagement (10) dudit au moins un engrenage satellite (8).

12. Appareil (1) selon la revendication 11, dans lequel l'arbre de sortie (5) est solidaire d'un élément planétaire (16) rotatif autour de l'axe de rotation (X) de l'arbre d'entraînement (4) et portant ledit au moins un engrenage satellite (8), et dans lequel ladite roue dentée (7) est fixe.

13. Appareil (1) selon la revendication 11, dans lequel ledit arbre de sortie (5) est solidaire de ladite roue dentée (7) et dans lequel ledit train d'engrenages épicycloïdal (2) comprend un élément planétaire fixe (16), positionné autour de l'axe de rotation (X) de l'arbre d'entraînement (4) et portant ledit au moins un engrenage satellite (8).

14. Appareil (1) selon l'une quelconque des revendications 2 à 13, dans lequel ladite unité de commutation (101) comporte des moyens de stabilisation (12) configurés pour stabiliser la position axiale de l'unité de commutation (101) dans lesdites au moins une première et une deuxième positions, de préférence, lesdits moyens de stabilisation (12) comprennent un ou plusieurs éléments de butée (13) maintenus en poussée radiale contre une surface extérieure de l'unité de commutation (101) et pouvant être mis en prise avec des socles (104) respectifs de l'unité de commutation (101), situés dans une position telle qu'ils accueillent lesdits éléments de butée (13) lorsque l'unité de commutation (101) atteint lesdites au moins une première et une deuxième positions.

15. Appareil (1) selon l'une quelconque des revendications précédentes, comprenant un corps de contenance (C) dans lequel sont logés ledit moteur électrique (3), ledit train d'engrenages épicycloïdal (2) et, au moins en partie, ledit système d'actionnement (100).

16. Appareil selon l'une quelconque des revendications 2 à 14 et la revendication 15, dans lequel ladite unité de commutation (101) dépasse partiellement dudit corps de contenance (C) pour permettre une action de commutation activée à partir de l'extérieur dudit corps de contenance (C).

17. Véhicule monté avec un appareil de propulsion (1) selon l'une quelconque des revendications précédentes, dans lequel l'appareil de propulsion (1) est monté sur le moyeu d'une roue (R) dudit véhicule.
